# EUROPÄISCHE PATENTSCHRIFT

(11) **EP 2 596 940 B1**
(45) Veröffentlichungstag und Bekanntmachung des Hinweises auf die Patenterteilung: **20.09.2017**
(21) Anmeldenummer: 12192366.8
(22) Anmeldetag: 13.11.2012
(51) Int. Cl.: B29C 65/08, B29C 65/74, G01B 7/14, G01R 27/02

(54) **VORRICHTUNG UND VERFAHREN ZUM VERSCHWEISSEN**
Device and method for welding
Dispositif et procédé de soudage

(30) Priorität: 25.11.2011 DE 102011119444
(43) Veröffentlichungstag der Anmeldung: 29.05.2013
(73) Patentinhaber: MS Ultraschall Technologie GmbH, 78549 Spaichingen (DE)
(72) Erfinder: Wein, Joachim, 78652 Deißlingen (DE); Poll, Hartmut, 78652 Deißlingen (DE); Noder, Elmar, 78662 Bösingen (DE); Balle, Clemens, 88079 Kressbronn (DE)
(74) Vertreter: Manitz Finsterwald Patentanwälte PartmbB

(56) Entgegenhaltungen:
- DE-A1-102009 046 319
- DE-B3- 10 231 742
- GB-A- 2 373 207
- US-A- 4 047 992

## Beschreibung

Die vorliegende Erfindung betrifft eine Vorrichtung nach dem oberbegriff der Anspruchs 1 und ein Verfahren zum Verschweißen oder Trennschweißen von Werkstücklagen mittels Ultraschall. Derartige Vorrichtungen bzw. Verfahren sind aus der DE 102 31 742 B3 bekannt und dienen dazu, die Werkstücklagen, beispielsweise Kunststoff, Folien oder auch andere Materiallagen, miteinander zu verschweißen und dabei gegebenenfalls auch einen überstehenden Rand neben der Schweißnaht abzutrennen.

Zum Verschweißen der Materialien wird dabei eine Sonotrode verwendet, die mittels einer Vorschubeinrichtung relativ zu einem Amboss anstellbar ist, wobei die erforderliche Ultraschallenergie von einem Ultraschallgenerator in die Sonotrode eingekoppelt wird. Problematisch ist bei derartigen Anordnungen, dass bei relativ dünnen Werkstücklagen, beispielsweise miteinander zu verschweißenden Folien, eine Beschädigung der Sonotrode bzw. des Ambosses erfolgt, wenn die mit Ultraschall beaufschlagte Sonotrode gegen den Amboss anschlägt. Dies gilt bei dünnen Werkstücklagen auch dann, wenn sich diese noch zwischen Amboss und Sonotrode befinden. Im Falle eines Trennschweißens sind die beiden Werkstücklagen zu diesem Zeitpunkt ohnehin durchtrennt, so dass auch in diesem Fall eine direkte Berührung zwischen Amboss und Sonotrode stattfindet.

Um eine Beschädigung bzw. einen Verschleiß von Sonotrode und Amboss zu verhindern, ist es aus dem Stand der Technik bekannt, zwischen Amboss und Sonotrode eine so genannte Opferfolie einzulegen, die vergleichsweise dick ist und einen mechanischen Schutz vor einem direkten Kontakt zwischen Sonotrode und Amboss liefert. Eine solche Opferfolie bedeutet jedoch zusätzliche Kosten, da diese bereitgestellt, verarbeitet und anschließend wieder entsorgt werden muss.

Es ist die Aufgabe der vorliegenden Erfindung, eine Vorrichtung und ein Verfahren zum Verschweißen oder Trennschweißen mittels Ultraschall zu schaffen, mit denen auf sehr einfache und kostengünstige Weise auf den Einsatz einer Opferfolie verzichtet werden kann.

Die Lösung dieser Aufgabe erfolgt durch die Merkmale der unabhängigen Ansprüche und bei einer erfindungsgemäßen Vorrichtung insbesondere dadurch, dass eine Detektoreinrichtung vorgesehen ist, die einen elektrischen Widerstand zwischen der Sonotrode und dem Amboss detektiert und die in Abhängigkeit von dem ermittelten Widerstand ein Deaktivierungssignal für die Sonotrode und/oder die Vorschubeinrichtung erzeugt.

Gemäß der Erfindung wird somit ein Abstand zwischen Sonotrode und Amboss durch eine Art Näherungssensor erfasst, der auf einfache Weise dadurch gebildet ist, dass der elektrische Widerstand zwischen Sonotrode und Amboss ermittelt wird. Die Erfindung beruht dabei auf der Erkenntnis, dass bereits bei Annäherung von Sonotrode und Amboss der Kontaktwiderstand sinkt, so dass schon vor einer endgültigen Berührung der beiden Bauteile, die eine Beschädigung bzw. einen Verschleiß hervorrufen könnte, ein vorauseilendes Erkennen der kurz bevorstehenden innigen Berührung möglich ist, so dass vor einem tatsächlichen Kontakt die Sonotrode abgeschaltet werden kann und/oder die Vorschubeinrichtung angehalten oder in ihrer Richtung umgekehrt werden kann. Aufgrund der Schwingungsamplituden der Sonotrode im Mikrometerbereich findet diese Erkennung bzw. Detektion im Bereich der letzten Mikrometer der Zustellbewegung statt.

Erfindungsgemäß weist die Detektorelrirlchtung einen Anschlusspunkt an der Sonotrode und einen Anschlusspunkt an dem Amboss auf , wobei beide Anschlusspunkte an eine Stromquelle angeschlossen sind und zusätzlich zwischen den beiden Anschlusspunkten ein elektrischer Lastwiderstand geschaltet ist. Eine solche Anordnung bietet den großen Vorteil, dass statische Aufladungen, die beispielsweise bei einem Verschweißen von zwei Folien häufig auftreten können, durch den zwischen Amboss und Sonotrode geschalteten Widerstand abgeführt werden. Durch Messen der über dem Lastwiderstand anliegenden Spannung kann dann auf sehr einfache unempfindliche und auch temperaturstabile Weise ermittelt werden, ob Amboss und Sonotrode noch voneinander beabstandet sind oder ob sich diese beiden Bauteile aneinander annähern. Bei einem ausreichend geringen Abstand, d.h. bei einer beginnenden Berührung der beiden Bauteile beginnt der Widerstand zwischen diesen beiden Bauteilen zu sinken, so dass die über dem Lastwiderstand gemessene Spannung abfällt. Sobald die Spannung einen unteren Schwellwert erreicht hat, kann der Ultraschallgenerator abgeschaltet werden und/oder die Vorschubeinrichtung kann angehalten oder in der Vorschubrichtung umgekehrt werden. Vorteilhafte Ausführungsformen der Erfindung sind in der Beschreibung, der Zeichnung sowie den Unteransprüchen beschrieben.

Es kann vorteilhaft sein, wenn der Lastwiderstand veränderbar ist, da hierdurch eine Anpassung an unterschiedliche Materialstärken der Werkstücklagen erfolgen kann.

Es kann vorteilhaft sein, den Lastwiderstand niederohmig auszubilden, beispielsweise im Bereich von etwa 50 Ω bis 2 kΩ, insbesondere im Bereich von etwa 500 Ω bis etwa 1,5 kΩ. Durch einen niederohmigen Lastwiderstand können im Bereich der Werkstücklagen, beispielsweise der zu verschweißenden Folien, entstehende Ladungen besonders gut abgeführt werden.

Weiterhin kann es vorteilhaft sein, die Stromquelle als Konstantstromquelle auszubilden, die einen Strom von etwa 5 mA bis 1 A, insbesondere etwa 10 bis 30 mA erzeugt. Eine solche Konstantstromquelle ist kostengünstig herstellbar.

Die vorstehend beschriebene Vorrichtung ist einfach aufgebaut, robust, kostengünstig und temperaturstabil, da sich bei verändernder Außentemperatur allenfalls die über dem Lastwiderstand gemessene Leerlaufspannung ändert.

Nach einer weiteren vorteilhaften Ausführungsform kann die Detektoreinrichtung einen Spannungsmesser umfassen, der zur Ermittlung des Widerstands zwischen Sonotrode und Amboss die Spannung über dem Lastwiderstand misst, wobei ein Komparator vorgesehen ist, der die gemessene Spannung mit einem Grenzwert vergleicht, der einstellbar sein kann. Mit Hilfe einer solchen einfachen Komparatorschaltung lässt sich eine Kollision zwischen Sonotrode und Amboss auf zuverlässige Weise vermeiden.

Nach einer weiteren vorteilhaften Ausführungsform kann es vorteilhaft sein, einen gemeinsamen Amboss mit mehreren Sonotroden einzusetzen, wobei jede Sonotrode mit einer eigenen Detektoreinrichtung versehen ist. Hierbei kann an dem Amboss nur ein einziger, gemeinsamer Anschlusspunkt für alle Detektoreinrichtungen vorgesehen sein. Auf diese Weise ist es möglich, mit einem einzigen Arbeitsschritt mehrere Produkte gleichzeitig zu verschweißen. Hierbei ist dafür Sorge getragen, dass auch bei unterschiedlichen Toleranzen im Bereich der verschiedenen Sonotroden eine individuelle Kontaktabschaltung für jede einzelne Sonotrode vorgenommen wird. Es kann auch vorteilhaft sein, den Amboss mehrteilig auszubilden, um für jede einzelne Sonotrode eine individuelle Gegenfläche zur Verfügung zu stellen, wobei dann die Kontaktabschaltung über den jeweils zugeordneten Amboss durchgeführt werden kann und die Sonotroden dabei auf dem gleichen elektrischen Potential liegen können.

Bei der vorstehend genannten Ausführungsform kann es auch vorteilhaft sein, mehrere Sonotroden an einem gemeinsamen Träger zu befestigen, wobei die einzelnen Sonotroden elektrisch voneinander isoliert sind, um die individuelle Kontaktabschaltung jeder Sonotrode sicherzustellen.

Gemäß einem weiteren Aspekt der Erfindung betrifft diese ein Verfahren zum Verschweißen oder Trennschweißen von Werkstücklagen mittels Ultraschall unter Verwendung einer Vorrichtung der vorstehend beschriebenen Art, wobei die folgenden Schritte, insbesondere in der nachstehend genannten Reihenfolge, durchgeführt werden: a) Aktivieren der Vorschubeinrichtung mit einer vorbestimmten Anstellkraft ohne Aktivierung der Sonotrode oder mit Aktivierung der Sonotrode mit niedriger Amplitude und Anstellen der Sonotrode in Richtung des Ambosses, um die Werkstücklagen zu komprimieren; b) Reduzieren der Anstellkraft; c) Aktivieren der Sonotrode oder Erhöhen der Amplitude auf einen höheren Wert; und d) Deaktivieren der Sonotrode und Erhöhen der Anstellkraft, insbesondere auf etwa den ursprünglichen Wert, wenn die Detektoreinrichtung ein Deaktivierungssignal erzeugt hat.

In dem oben genannten Verfahren werden in dem Schritt a) zunächst die Toleranzen aus dem System entfernt und die zu verschweißenden Werkstücklagen werden komprimiert. Durch Reduzierung der Anstellkraft im Schritt b) wird die Voraussetzung geschaffen, dass im Schritt c) die Sonotrode aktiviert oder stärker aktiviert werden kann, ohne dass bereits eine Berührung mit dem Amboss stattfindet. Sobald dann die Detektoreinrichtung im Schritt d) ein Deaktivierungssignal erzeugt hat, kann die Sonotrode deaktiviert werden, damit eine Beschädigung von Sonotrode und Amboss ausgeschlossen ist. Anschließend kann die Anstellkraft nochmals erhöht werden, was insbesondere im Falle des Trennschweißens vorteilhaft sein kann, um die abzutrennenden Abschnitte vollständig zu trennen.

Es kann vorteilhaft sein, die reduzierte Anstellkraft so zu wählen, dass diese etwa die Hälfte der vorbestimmten Anstellkraft beträgt.

Weiterhin kann es vorteilhaft sein, die Sonotrode auch dann zu deaktivieren, wenn die Detektoreinrichtung kein Deaktivierungssignal erzeugt hat, jedoch die Sonotrode mit einer vorbestimmten maximalen Energie oder über eine vorbestimmte Zeit beaufschlagt wurde. In diesem Fall ist sichergestellt, dass auch dann eine zufrieden stellende Schweißnaht erzeugt wird, falls aufgrund von Toleranzen oder dergleichen kein Deaktivierungssignal erzeugt worden ist. Durch Erhöhen der Anstellkraft nach Deaktivieren der Sonotrode lässt sich im Verfahrensschritt d) auch in diesem Fall ein ordnungsgemäßes Trennschweißen verwirklichen.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine schematische Seitenansicht einer Vorrichtung zum Verschweißen oder Trennschweißen; und
- Fig. 2: ein Schaltdiagramm der verwendeten Detektoreinrichtung.

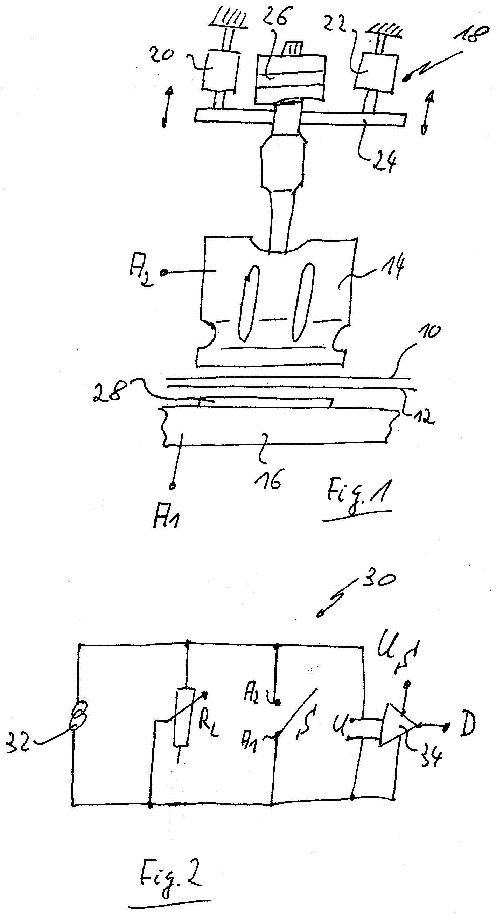

Fig. 1 zeigt rein schematisch und beispielhaft eine Seitenansicht einer Vorrichtung zum Verschweißen oder Trennschweißen von Werkstücklagen mittels Ultraschall, wobei es sich bei dem dargestellten Ausführungsbeispiel um eine Vorrichtung zum Trennschweißen von zwei Folien 10 und 12 handelt, die mit Hilfe einer Sonotrode 14 verschweißt und getrennt werden, die gegen einen Amboss 16 anstellbar ist.

Bei dem dargestellten Ausführungsbeispiel dient zum Anstellen der Sonotrode gegen den Amboss eine Vorschubeinrichtung 18, die zwei Stellzylinder, beispielsweise Pneumatikzylinder 20 und 22 umfasst, mit deren Hilfe eine Aufnahme 24 entlang der dargestellten Doppelpfeile in vertikaler Richtung bewegbar ist, um die an der Aufnahme 24 befestigte Sonotrode 14 in Richtung des Ambosses 16 zuzustellen. Mit dem Bezugszeichen 26 ist ein Ultraschallgenerator bezeichnet.

Der Amboss 16 kann grundsätzlich eine beliebige Form aufweisen, beispielsweise plattenförmig oder auch walzenförmig sein, und er weist bei dem dargestellten Ausführungsbeispiel ein Trennschweißprofil 28 auf, das in Zusammenwirken mit der Sonotrode 14 dazu dient, die Folien 10, 12 zunächst miteinander zu verschweißen und dann außerhalb der Schweißnaht abzutrennen.

Es versteht sich, dass die vorstehend beschriebene Ausführungsform rein beispielhaft ist und dass es grundsätzlich keine Rolle spielt, ob die Sonotrode in Richtung des Ambosses bewegt wird oder aber ob die Sonotrode stationär ist und der Amboss in Richtung der Sonotrode bewegt wird, oder ob beide Bauteile gleichzeitig bewegt werden. Auch kann der Amboss oberhalb der Sonotrode und die Sonotrode unterhalb des Ambosses angeordnet sein. Weiterhin ist es möglich, einen gemeinsamen Amboss 16 und mehrere Sonotroden 14 vorzusehen, um in einem Arbeitsschritt gleichzeitig mehrere Schweißvorgänge durchführen zu können. In diesem Zusammenhang kann es vorteilhaft sein, die Sonotroden - unter Umständen mechanisch voneinander entkoppelt - an der gemeinsamen Aufnahme 24 zu befestigen, jedoch elektrisch voneinander zu isolieren.

Wie Fig. 1 weiterhin verdeutlicht, ist an dem Amboss, der aus elektrisch leitendem Material besteht, ein elektrischer Anschlusspunkt A₁ vorgesehen und an der Sonotrode 14, die ebenfalls aus elektrisch leitendem Material besteht, ist ein elektrischer Anschlusspunkt A₂ vorgesehen. Beide Anschlusspunkte dienen zum Anschluss an eine Detektoreinrichtung, die im Zusammenhang mit Fig. 2 näher erläutert wird.

Die in Fig. 2 schematisch dargestellte Detektoreinrichtung 30 weist eine Konstantstromquelle 32 auf, die mit dem Anschlusspunkt A₁ an dem Amboss 16 und mit dem Anschlusspunkt A₂ an der Sonotrode 14 verbunden ist. Parallel zu der Stromquelle 32 und zu den beiden Anschlusspunkten A₁ und A₂ ist ein veränderbarer bzw. einstellbarer Lastwiderstand R_{L} geschaltet, so dass durch einen elektrischen Kontakt zwischen Sonotrode 14 und Amboss 16, der in Fig. 2 mit einem Schaltersymbol S symbolisiert ist, der Lastwiderstand R_{L} kurzgeschlossen wird.

Parallel zu dem Lastwiderstand R_{L} und dem Schalter S ist bei der Detektoreinrichtung 30 ein Komparator 34 geschaltet, der die über dem Schalter S bzw. am Lastwiderstand R_{L} anliegende Spannung mit einer Schwellwertspannung Us vergleicht, die voreinstellbar ist. Sobald die am Lastwiderstand R_{L} anliegende Spannung die voreingestellte Schwellwertspannung Us erreicht hat, gibt der Komparator 34 ein Deaktivierungssignal D aus, das mit Hilfe einer nicht näher dargestellten Steuerung dazu führt, dass die Sonotrode 14 abgeschaltet wird und/oder dass die Vorschubeinrichtung 18 angehalten oder in ihrer Vorschubrichtung umgekehrt wird.

Bei einem Schweißen oder Trennschweißen mit der vorstehend beschriebenen Vorrichtung wird zunächst ohne aktivierte Sonotrode 14 die Vorschubeinrichtung 18 betätigt, so dass die Folien 10 und 12 komprimiert und zwischen Sonotrode 14 und Amboss 16 eingespannt werden. Anschließend wird die Vorschubkraft der Vorschubeinrichtung 18 reduziert (beispielsweise kann der Druck in den Stellzylindern 20 und 22 von 3,5 bar auf 1,5 bar herabgesetzt werden), so dass anschließend durch Anschalten des Ultraschallgenerators 26 die Sonotrode 14 aktiviert werden kann. Im Anschluss daran erfolgt ein Verschweißen der Folien 10 und 12 sowie ein sich (im Falle des Trennschweißens) anschließendes Abtrennen eines Randbereichs. Sobald sich in diesem Fall Sonotrode 14 und Amboss 16 ausreichend angenähert haben, verringert sich der Widerstand zwischen diesen beiden Bauteilen und die Spannung U über dem Lastwiderstand R_{L} fällt ab. Wenn der Spannungsabfall einen voreingestellten Wert Us erreicht hat, gibt der Komparator 34 ein Deaktivierungssignal aus und die Sonotrode 14 wird deaktiviert. Anschließend kann ohne Ultraschallbeaufschlagung die Sonotrode nochmals mit erhöhter Andruckkraft gegen den Amboss 16 gedrückt werden, um ein endgültiges Abtrennen des Randbereichs sicherzustellen.

Ein Abschalten des Ultraschallgenerators 26 kann auch dann erfolgen, wenn noch kein Deaktivierungssignal D erzeugt worden ist, jedoch die Sonotrode 14 mit einer vorbestimmten maximalen Energie oder über eine vorbestimmte Zeit beaufschlagt wurde, da in diesem Fall eine darüber hinausgehende Bearbeitung mit Ultraschall die erzeugte Schweißnaht unter Umständen schädigen könnte. Nachdem im letzten Schritt bei abgeschalteter Sonotrode die Anstellkraft nochmals erhöht wird, wird auch in diesem Fall der Randabschnitt wie gewünscht abgetrennt. Falls kein Trennschweißen sondern lediglich ein Verschweißen gewünscht wird, kann das Erhöhen der Anstellkraft im letzten Schritt entfallen und die Sonotrode kann wieder von dem Amboss wegbewegt werden.

Bei dem in Fig. 2 dargestellten Ausführungsbeispiel der Detektoreinrichtung erzeugt die Stromquelle 32 einen Konstantstrom von etwa 20 mA. Der Lastwiderstand R_{L} ist im Bereich von etwa 1 kΩ einstellbar. Es versteht sich, dass diese Werte nur beispielhaft sind. In jedem Fall sollte jedoch der Lastwiderstand ausreichend niedrig gewählt werden, so dass die im Bereich der Folien entstehenden statischen Aufladungen abgeführt werden, ohne die gewünschte Kontaktabschaltung negativ zu beeinflussen.

## Patentansprüche

1. Vorrichtung zum Verschweißen oder Trennschweißen von Werkstücklagen (10, 12) mittels Ultraschall, umfassend zumindest eine Sonotrode (14) und zumindest einen Amboss (16), die mit einer Vorschubeinrichtung (18) relativ zueinander anstellbar sind, wobei eine Detektoreinrichtung (30) vorgesehen ist, die einen elektrischen Widerstand zwischen der Sonotrode (14) und dem Amboss (16) detektiert, **dadurch gekennzeichnet, dass** die Detektoreinrichtung (30) in Abhängigkeit von dem ermittelten Widerstand ein Deaktivierungssignal (D) für die Sonotrode (14) und/oder die Vorschubeinrichtung (18) erzeugt, und einen Anschlusspunkt (A₂) an der Sonotrode (14) und einen Anschlusspunkt (A₁) an dem Amboss (16) aufweist, die beide an eine Stromquelle (32) angeschlossen sind, und dass zwischen den beiden Anschlusspunkten (A₁, A₂) ein elektrischer Lastwiderstand (R_{L}) geschaltet ist.

2. Vorrichtung nach Anspruch 1,
**dadurch gekennzeichnet, dass**
der elektrische Lastwiderstand (R_{L}) veränderbar ist.

3. Vorrichtung nach Anspruch 1 oder 2,
**dadurch gekennzeichnet, dass**
der Lastwiderstand (R_{L}) niederohmig ist und vorzugsweise im Bereich von etwa 50 - 2000 Ohm, bevorzugt 500 - 1500 Ohm liegt.

4. Vorrichtung nach zumindest Anspruch 1,
**dadurch gekennzeichnet, dass**
die Stromquelle (32) eine Konstantstromquelle ist, die einen Strom von etwa 5 - 1000 mA, vorzugsweise etwa 10 - 30 mA erzeugt.

5. Vorrichtung nach Anspruch 1,
**dadurch gekennzeichnet, dass**
mehrere Sonotroden (14) und ein gemeinsamer Amboss (16) vorgesehen sind, und dass jede Sonotrode (14) mit einer eigenen Detektoreinrichtung versehen ist, wobei insbesondere an dem Amboss (16) nur ein einziger, gemeinsamer Anschlusspunkt für alle Detektoreinrichtungen vorgesehen ist.

6. Vorrichtung nach Anspruch 1,
**dadurch gekennzeichnet, dass**
mehrere Sonotroden (14) und mehrere Ambosse (16) vorgesehen sind, und dass jeder Amboss (16) mit einer eigenen Detektoreinrichtung versehen ist, wobei insbesondere an den Sonotroden (14) nur ein einziger, gemeinsamer Anschlusspunkt für alle Detektoreinrichtungen vorgesehen ist.

7. Vorrichtung nach Anspruch 5 oder 6,
**dadurch gekennzeichnet, dass**
die Sonotroden (14) oder die Ambosse (16) elektrisch voneinander isoliert an einem gemeinsamen Träger (24) befestigt sind.

8. Vorrichtung nach Anspruch 1,
**dadurch gekennzeichnet dass** die Detektoreinrichtung (30) einen Spannungsmesser umfasst, der zur Ermittlung des Widerstands zwischen Sonotrode und Amboss die Spannung (U) über dem Lastwiderstand (R_{L}) misst, und dass ein Komparator (34) vorgesehen ist, der die gemessene Spannung (U) mit einem insbesondere einstellbaren Grenzwert (Us) vergleicht.

9. Verfahren zum Verschweißen oder Trennschweißen von Werkstücklagen mittels Ultraschall, unter Verwendung einer Vorrichtung nach zumindest einem der vorstehenden Ansprüche,
**gekennzeichnet durch** folgende Schritte:
a) Aktivieren der Vorschubeinrichtung mit einer vorbestimmten Anstellkraft ohne Aktivierung der Sonotrode oder mit Aktivierung der Sonotrode mit niedriger Amplitude und Anstellen der Sonotrode in Richtung des Ambosses, um die Werkstücklagen zu komprimieren; b) Reduzieren der Anstellkraft; c) Aktivieren der Sonotrode oder Erhöhen der Amplitude auf einen höheren Wert; und
d) Deaktivieren der Sonotrode und Erhöhen der Anstellkraft, insbesondere auf etwa den ursprünglichen Wert, wenn die Detektoreinrichtung ein Deaktivierungssignal erzeugt hat.

10. Verfahren nach Anspruch 9,
**dadurch gekennzeichnet, dass**
die reduzierte Anstellkraft etwa die Hälfte der vorbestimmten Anstellkraft beträgt.

11. Verfahren nach Anspruch 9 oder 10,
**dadurch gekennzeichnet, dass**
die Sonotrode auch dann deaktiviert wird, wenn die Detektoreinrichtung kein Deaktivierungssignal erzeugt, jedoch die Sonotrode mit einer vorbestimmten maximalen Energie oder über eine vorbestimmte Zeit beaufschlagt wurde.

## Claims

1. An apparatus for welding or for cutting and sealing workpiece layers (10, 12) by means of ultrasound comprising at least one sonotrode (14) and at least one anvil (16) which can be positioned relative to one another by a feed device (18), wherein a detector device (30) is provided which detects an electrical resistance between the sonotrode (14) and the anvil (16),
**characterized in that**
the detector device (30) generates a deactivation signal (D) for the sonotrode (14) and/or for the feed device (18) in dependence on the determined resistance and has a terminal point (A₂) at the sonotrode (14) and a terminal point (A₁) at the anvil (16) which are both connected to a current source (32); and **in that** an electric load resistor (R_{L}) is connected between the two terminal points (A₁, A₂).

2. An apparatus in accordance with claim 1,
**characterized in that**
the electric load resistor (R_{L}) is variable.

3. An apparatus in accordance with claim 1 or claim 2,
**characterized in that**
the load resistor (R_{L}) is of low ohm resistance and preferably lies in the range from approximately 50 to 2000 ohms, preferentially 500 to 1500 ohms.

4. An apparatus in accordance with claim 1,
**characterized in that**
the current source (32) is a constant current source which generates a current of approximately 5 to 1000 mA, preferably of approximately 10 to 30 mA.

5. An apparatus in accordance with claim 1,
**characterized in that**
a plurality of sonotrodes (14) and a common anvil (16) are provided; and **in that** each sonotrode (14) is provided with its own detector device, with in particular only one single, common terminal point being provided at the anvil (16) for all detector devices.

6. An apparatus in accordance with claim 1,
**characterized in that**
a plurality of sonotrodes (14) and a plurality of anvils (16) are provided; and **in that** each anvil (16) is provided with its own detector device, with in particular only one single, common terminal point being provided at the sonotrodes (14) for all detector devices.

7. An apparatus in accordance with claim 5 or claim 6,
**characterized in that**
the sonotrodes (14) or the anvils (16) are fastened to a common carrier (24) electrically insulated from one another.

8. An apparatus in accordance with claim 1,
**characterized in that**
the detector device (30) comprises a voltmeter which measures the voltage (U) over the load resistor (R_{L}) for determining the resistance between the sonotrode and the anvil; and **in that** a comparator (34) is provided which compares the measured voltage (U) with a limit value (Us) which is in particular adjustable.

9. A method for welding or for cutting and sealing workpiece layers by means of ultrasound while using an apparatus in accordance with at least one of the preceding claims,
**characterized by** the following steps:
a) activating the feed device at a predefined positioning force without activating the sonotrode or with activating the sonotrode at a low amplitude and positioning the sonotrode in the direction of the anvil to compress the workpiece layers; b) reducing the positioning force; c) activating the sonotrode or increasing the amplitude to a higher value; and
d) deactivating the sonotrode and increasing the positioning force, in particular to approximately the original value, when the detector device has generated a deactivation signal.

10. A method in accordance with claim 9,
**characterized in that**
the reduced positioning force amounts to approximately half the predefined positioning force.

11. A method in accordance with claim 9 or claim 10,
**characterized in that**
the sonotrode is also deactivated when the detector device does not generate any deactivation signal, but the sonotrode was acted on by a predefined maximum energy or over a predefined time.

## Revendications

1. Dispositif de soudage ou de soudage et de coupe de couches d'une pièce (10, 12) par ultrasons, comportant au moins une sonotrode (14) et au moins une enclume (16) qui sont aptes à être approchées l'une de l'autre par un système d'avance (18), dans lequel est prévu un système de détection (30) qui détecte une résistance électrique entre la sonotrode (14) et l'enclume (16),
**caractérisé en ce que**
le système de détection (30) génère un signal de désactivation (D) pour la sonotrode (14) et/ou le système d'avance (18) en fonction de la résistance déterminée et présente un point (A₂) de connexion à la sonotrode (14) et un point (A₁) de connexion à l'enclume (16), qui sont tous les deux connectés à une source de courant (32),
et **en ce qu'**une résistance de charge électrique (R_{L}) est agencée entre les deux points de connexion (A₁, A₂).

2. Dispositif selon la revendication 1,
**caractérisé en ce que**
la résistance de charge électrique (R_{L}) est variable.

3. Dispositif selon la revendication 1 ou 2,
**caractérisé en ce que**
la résistance de charge électrique (R_{L}) présente une faible valeur ohmique et se situe de préférence dans la plage d'environ 50 à 2000 ohms, de préférence de 500 à 1500 ohms.

4. Dispositif selon la revendication 1,
**caractérisé en ce que**
la source de courant (32) est une source de courant constant qui génère un courant d'environ 5 à 1000 mA, de préférence d'environ 10 à 30 mA.

5. Dispositif selon la revendication 1,
**caractérisé en ce que**
il est prévu plusieurs sonotrodes (14) et une enclume commune (16), et **en ce que** chaque sonotrode (14) est pourvue d'un propre système de détection, et sur l'enclume (16) est prévu en particulier un seul point de connexion commun pour tous les systèmes de détection.

6. Dispositif selon la revendication 1,
**caractérisé en ce que**
il est prévu plusieurs sonotrodes (14) et plusieurs enclumes (16),
et **en ce que** chaque enclume (16) est pourvue d'un propre système de détection, et sur les sonotrodes (14) est prévu en particulier un seul point de connexion commun pour tous les systèmes de détection.

7. Dispositif selon la revendication 5 ou 6,
**caractérisé en ce que**
les sonotrodes (14) ou les enclumes (16) sont fixés sur un support commun (24) en étant électriquement isolées les unes des autres.

8. Dispositif selon la revendication 1,
**caractérisé en ce que**
le système de détection (30) comprend un voltmètre qui mesure la tension (U) sur la résistance de charge (R_{L}) pour déterminer la résistance entre la sonotrode et l'enclume,
et **en ce qu'**il est prévu un comparateur (34) qui compare la tension mesurée (U) à une valeur limite (U_{S}) en particulier réglable.

9. Procédé de soudage ou de soudage et de coupe de couches d'une pièce par ultrasons, en utilisant un dispositif selon l'une au moins des revendications précédentes,
**caractérisé par** les étapes suivantes consistant à :
a) activer un système d'avance par une force d'approche prédéterminée sans activation de la sonotrode ou avec activation de la sonotrode à faible amplitude et avec approche de la sonotrode en direction de l'enclume, afin de comprimer les couches de la pièce ;
b) réduire la force d'approche ;
c) activer la sonotrode ou augmenter l'amplitude à une valeur plus élevée ; et
d) désactiver la sonotrode et augmenter la force d'approche, en particulier approximativement à la valeur initiale, lorsque le système de détection a généré un signal de désactivation.

10. Dispositif selon la revendication 9,
**caractérisé en ce que**
la force d'approche réduite s'élève à environ la moitié de la force d'approche prédéterminée.

11. Procédé selon la revendication 9 ou 10,
**caractérisé en ce que**
la sonotrode est désactivée même lorsque le système de détection ne génère pas de signal de désactivation, mais que la sonotrode a été sollicitée avec une énergie maximale prédéterminée ou pendant un temps prédéterminé.
